# EUROPEAN PATENT APPLICATION

(11) **EP 4 460 050 A1**
(43) Date of publication of application: **06.11.2024**
(21) Application number: 22914644.4
(22) Date of filing: 26.12.2022
(51) Int. Cl.: H04W 4/06, H04W 24/10, H04W 28/16

(54) **MULTICAST SERVICE TRANSMISSION METHOD, TERMINAL, AND NETWORK SIDE DEVICE**

(30) Priority: 27.12.2021 CN 202111616685
(71) Applicant: VIVO MOBILE COMMUNICATION CO., LTD., Dongguan, Guangdong 523863 (CN)
(72) Inventor: LIU, Jiamin, Dongguan, Guangdong 523863 (CN); YANG, Xiaodong, Dongguan, Guangdong 523863 (CN)
(74) Representative: Conti, Marco
(86) International application number: PCT/CN2022/141850
(87) International publication number: WO 2023/125390

(57) **Abstract**

This application discloses a multicast service transmission method, a terminal, and a network side device, and relates to the field of communication technologies. According to an embodiment of this application, the multicast service transmission method includes: sending, by a terminal in a case that the terminal is interested in or receives a multicast service, related information of the multicast service to a network side device corresponding to a unicast service. The related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

## Description

### CROSS-REFERENCE TO RELATED APPLICATIONS

This application claims priority to Chinese Patent Application No. 202111616685.9, filed on December 27, 2021, the entire content of which is incorporated herein by reference.

### TECHNICAL FIELD

This application relates to the field of wireless communication technologies, and specifically, to a multicast service transmission method, a terminal, and a network side device.

### BACKGROUND

In the related art, a terminal may simultaneously support reception of a multicast service (Multicast/Broadcast Service, MBS) or a unicast service. But for a scenario in which related information of the multicast service is not clear to a serving base station corresponding to the unicast service, such as a scenario in which the multicast service and the unicast service are not controlled by the same serving base station or located in different public land mobile network (Public Land Mobile Network, PLMN), once the terminal is interested in or starts to receive the multicast service, the terminal needs to split a corresponding capability to receive the multicast service. As a result, there is a problem that a unicast service scheduling capability is limited even in a gap that the multicast service is received, further affecting a transmission rate of the unicast service, and leading to poor user experience.

### SUMMARY

Embodiments of this application provide a multicast service transmission method, a terminal, and a network side device, so that a capability of a terminal in scheduling/receiving a unicast service in a gap that no multicast service is received can be improved.

According to a first aspect, a multicast service transmission method is provided, including: sending, by a terminal in a case that the terminal is interested in or receives a multicast service, related information of the multicast service to a network side device corresponding to a unicast service, where the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

According to a second aspect, a multicast service transmission method is provided, including: receiving, by a network side device, related information of a multicast service that is sent by a terminal, where the network side device is a network side device that provides a unicast service to the terminal, the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service; and scheduling, by the network side device, the unicast service according to at least one of the capability information, the carrier feature information of the multicast service, and the time domain periodicity information of the multicast service.

According to a third aspect, a multicast service transmission apparatus is provided, including: a first transmission module, configured to send, in a case of being interested in or receiving a multicast service, related information of the multicast service to a network side device corresponding to a unicast service, where the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

According to a fourth aspect, a multicast service transmission apparatus is provided, applied to a network side device, the apparatus including: a second transmission module, configured to receive related information of a multicast service that is sent by a terminal, where the network side device is a network side device that provides a unicast service to the terminal, the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service; and a scheduling module, configured to schedule the unicast service according to at least one of the capability information, the carrier feature information of the multicast service, and the time domain periodicity information of the multicast service.

According to a fifth aspect, a terminal is provided, including a processor and a memory, where the memory stores a program or instructions executable on the processor, and when the program or the instructions are executed by the processor, the steps of the method according to the first aspect are implemented.

According to a sixth aspect, a terminal is provided, including a processor and a communication interface, where the communication interface is coupled to the processor, and the processor is configured to execute a program or instructions, to implement the steps of the method according to the first aspect.

According to a seventh aspect, a network side device is provided, including a processor and a memory, where the memory stores a program or instructions executable on the processor, and when the program or instructions are executed by the processor, the steps of the method according to the second aspect are implemented.

According to an eighth aspect, a network side device is provided, including a processor and a communication interface, where the communication interface is coupled to the processor, and the processor is configured to execute a program or instructions, to implement the steps of the method according to the second aspect.

According to a ninth aspect, a communication system is provided, including a terminal and a network side device, where the terminal may be configured to implement the steps of the method according to the first aspect, and the network side device may be configured to implement the steps of the method according to the second aspect.

According to a tenth aspect, a readable storage medium is provided, having a program or instructions stored therein, where when the program or the instructions are executed by a processor, the steps of the method according to the first aspect are implemented, or the steps of the method according to the second aspect are implemented.

According to an eleventh aspect, a chip is provided, including a processor and a communication interface, where the communication interface is coupled to the processor, and the processor is configured to execute a program or instructions, to implement the steps of the method according to the first aspect, or implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect or implement the steps of the method according to the second aspect.

In the embodiments of this application, in a case that a terminal is interested in or receives a multicast service, the terminal sends related information of the multicast service to a network side device corresponding to a unicast service, where the related information is at least one of capability information, carrier feature information of the multicast service, and time domain periodicity information of the multicast service. In this way, the network side device may accurately evaluate a capability of the terminal according to at least one of the capability information, the carrier feature information of the multicast service, and the time domain periodicity information of the multicast service, and further accurately schedule the unicast service. In addition, a capability of the terminal in scheduling a unicast service in a gap that no multicast service is performed can also be improved greatly, thereby improving user experience and avoiding a waste of system resources.

### BRIEF DESCRIPTION OF THE DRAWINGS

FIG. 1 is a schematic structural diagram of a wireless communication system according to an embodiment of this application.
FIG. 2 is a first schematic flowchart of a multicast service transmission method according to an embodiment of this application.
FIG. 3 is a second schematic flowchart of a multicast service transmission method according to an embodiment of this application.
FIG. 4 is a third schematic flowchart of a multicast service transmission method according to an embodiment of this application.
FIG. 5 is a first schematic structural diagram of a multicast service transmission apparatus according to an embodiment of this application.
FIG. 6 is a second schematic structural diagram of a multicast service transmission apparatus according to an embodiment of this application.
FIG. 7 is a schematic structural diagram of a terminal according to an embodiment of this application.
FIG. 8 is a schematic structural diagram of a network side device according to an embodiment of this application.

### DETAILED DESCRIPTION

The following clearly describes technical solutions in embodiments of this application with reference to the accompanying drawings in the embodiments of this application. Apparently, the described embodiments are some embodiments rather than all of the embodiments of this application. All other embodiments obtained by a person of ordinary skill in the art based on the embodiments of this application fall within the protection scope of this application.

The terms "first," "second," and the like in the specification and the claims of this application are used for distinguishing between similar objects and are not used for describing a specific sequential or order. It should be understood that the terms used in this way are interchangeable in proper circumstances, so that the embodiments of this application can be implemented in another sequence other than those illustrated or described herein. In addition, the objects distinguished by "first" and "second" generally belong to the same category and a number of the objects is not limited. For example, there may be one or more first objects. In addition, in the specification and the claims, "and/or" indicates at least one of connected objects, and the character "/" generally indicates an "or" relationship between associated objects.

It should be noted that a technology described in the embodiments of this application is not limited to a long term evolution (Long Term Evolution, LTE)/LTE-advanced (LTE-Advanced, LTE-A) system, and may further be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. Terms "system" and "network" in the embodiments of this application may usually be used interchangeably. The described technology may be applied to the foregoing mentioned systems and radio technologies, and may also be applied to other systems and radio technologies. The following describes a new radio (New Radio, NR) system for an exemplary purpose, and NR terms are used in most of the description below. These technologies may also be applied to an application other than an NR system application, such as a 6th generation (6th Generation, 6G) communication system.

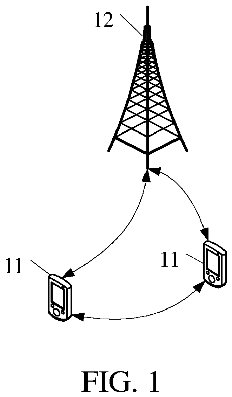

FIG. 1 shows a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), or a smart home (home devices with a wireless communication function, such as a refrigerator, a television, a washing machine, a furniture, or the like). The wearable device includes a smart watch, a smart band, a smart headset, smart glasses, a smart jewelry (a smart bangle, a smart bracelet, a smart ring, a smart necklace, a smart anklet, or a smart anklet bracelet), a smart wristlet, a smart clothes, or the like. It should be noted that, a specific type of the terminal 11 is not limited in the embodiments of this application. The network side device 12 may be an access network device or a core network device, where the access network device 12 may also be referred to as a radio access network device, a radio access network (Radio Access Network, RAN), a radio access network function, a radio access network unit, or the like. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting and receiving point (Transmitting Receiving Point, TRP), or another appropriate term in the field, and provided that the same technical effect can be achieved, the base station is not limited to a specific technical term. It should be noted that, a base station in an NR system is only used as an example in the embodiments of this application, and a specific type of the base station is not limited. The following describes in detail the technical solutions provided in the embodiments of this application with reference to the accompanying drawings and through some embodiments and application scenarios thereof.

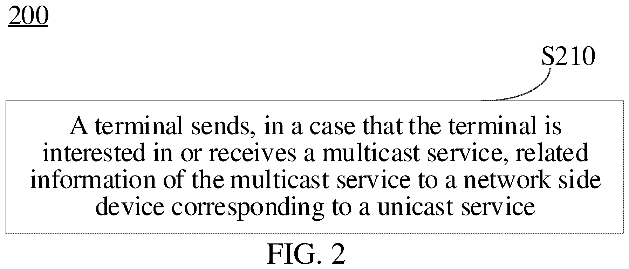

FIG. 2 is a schematic flowchart of a multicast service transmission method 200 according to an exemplary embodiment of this application. The method may be, but not limited to, performed by a terminal, and specifically, may be performed by hardware and/or software installed in the terminal. In this embodiment, the method 200 at least may include the following step.

S210. The terminal sends, in a case that the terminal is interested in or receives a multicast service, related information of the multicast service to a network side device corresponding to a unicast service.

The terminal may be in a connected state and can perform a receive only mode (Receive Only Mode, ROM); or the terminal is in a connected state and a network side device (also referred to as a serving base station or a unicast service serving base station) that performs a unicast service with the terminal is different from a network side device (also referred to as a serving base station or a multicast serving base station) that performs a multicast service with the terminal; or the terminal is in a connected state and a public land mobile network (Public Land Mobile Network, PLMN) on which the terminal performs a unicast service is different from a PLMN on which the terminal performs a multicast service. In this way, the network side device corresponding to the unicast service may not be aware of or cannot obtain the related information of the multicast service (for example, the multicast service in which the terminal is interested or the multicast service that is being received by the terminal). As a result, the network side device corresponding to the unicast service necessarily cannot accurately schedule the unicast service. Based on this, in this application, in a case that the terminal is interested in or receives the multicast service, the related information of the multicast service is sent to the network side device corresponding to the unicast service in time, such as at least one of capability information of the terminal (also may be understood as updated capability information of the terminal), carrier feature information of the multicast service, and time domain periodicity information of the multicast service, so that the network side device can schedule the unicast service according to the capability information of the terminal, the carrier feature information of the multicast service (for example, frequency information, bandwidth information, carrier configuration information, and the like), and the time domain periodicity information of the multicast service, thereby ensuring the receiving performance of the terminal in receiving a multicast service, and ensuring the transmission and system efficiency of a unicast service.

That is, through reporting of the capability information and the carrier feature information by the terminal, a unicast service serving base station corresponding to the unicast service can better evaluate a capability of the terminal, and further perform unicast scheduling in a more targeted manner.

In addition, the time domain periodicity information of the multicast service is used for indicating an effective time domain of the capability information and/or the carrier feature information of the multicast service, the network side device may perform more accurate capability and/or carrier allocation by using the time domain periodicity information. Therefore, a unicast service scheduling capability of the terminal can be improved in a gap that no multicast service is received, thereby avoiding a waste of system resources.

Certainly, in this embodiment, the terminal may transmit the related information of the multicast service through any one of the following (11) to (13).

(11) Multicast service interest indication (MBS Interest Indication).

(12) Terminal assistance information (UE assistance information).

It may be understood that for the foregoing (11) and (12), it may be understood that the terminal may multiplex the multicast service interest indication or the terminal assistance information to transmit the related information of the multicast service.

(13) First signaling, where the first signaling is agreed on in a protocol and dedicated to reporting the related information of the multicast service. The first signaling may be capability update (Capability update) signaling, which is not limited herein.

In an implementation, for a reporting occasion (also may be understood as a trigger occasion) of the related information of the multicast service may be that, reporting is performed when the terminal starts the multicast service, or reporting may be performed when the terminal ends the multicast service, or reporting may be performed when a received carrier feature or capability information of the multicast service changes, which is not limited herein.

In this embodiment, in a case that a terminal is interested in or receives a multicast service, the terminal sends related information of the multicast service to a network side device corresponding to a unicast service, where the related information is at least one of capability information, carrier feature information of the multicast service, and time domain periodicity information of the multicast service. In this way, the network side device may accurately evaluate a capability of the terminal according to at least one of the capability information, the carrier feature information of the multicast service, and the time domain periodicity information of the multicast service, and further accurately schedule the unicast service. In addition, a capability of the terminal in scheduling a unicast service in a gap that no multicast service is performed can also be improved greatly, thereby improving user experience and avoiding a waste of system resources.

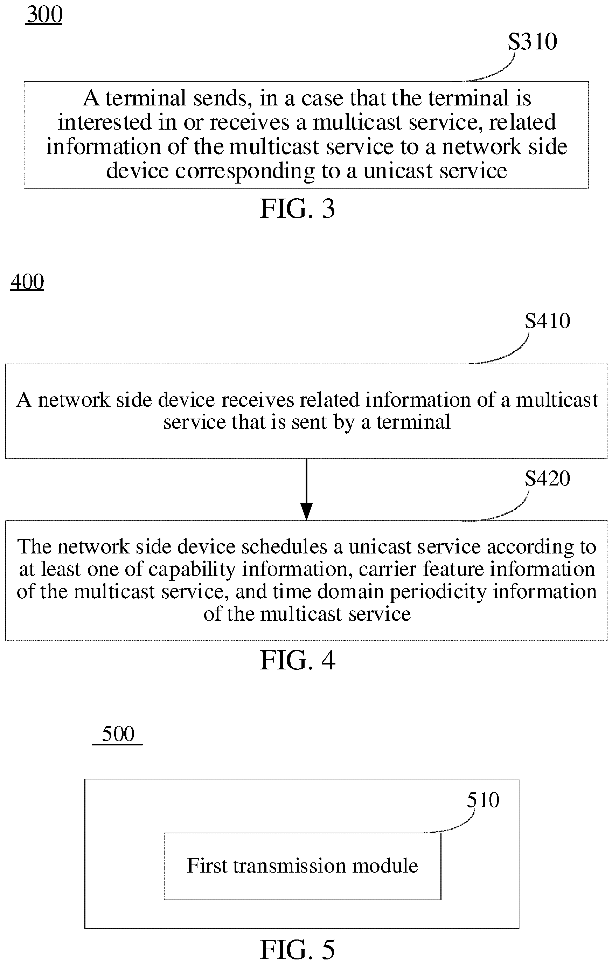

FIG. 3 is a schematic flowchart of a multicast service transmission method 300 according to an exemplary embodiment of this application. The method may be, but not limited to, performed by a terminal, and specifically, may be performed by hardware and/or software installed in the terminal. In this embodiment, the method 300 at least may include the following step.

S310. The terminal sends, in a case that the terminal is interested in or receives a multicast service, related information of the multicast service to a network side device corresponding to a unicast service.

The related information of the multicast service at least includes at least one of capability information of the terminal, carrier feature information of the multicast service, and time domain periodicity information of the multicast service, and the time domain periodicity information of the multicast service is used for indicating an effective time domain (or effective time domain information) of the capability information and/or the carrier feature information of the multicast service.

It may be understood that, for an implementation process of S310, in addition to referring to the related description in the method embodiment 200, in a possible implementation, the carrier feature information may include frequency information and bandwidth information that are received by the multicast service, carrier configuration information of the multicast service (for example, numerology (numerology), a subcarrier spacing (Subcarrier Spacing), and the like), and the like. A frequency and a bandwidth that are received by the multicast service should at least fall within a scope of a CA band combination (carrier band combination) of the terminal, that is, fall within a basic receiving bandwidth combination of the terminal, and a numerology situation of a multicast carrier decides a processing capability of the terminal. For example, different subcarrier spacings require different processing complexities (for example, discrete Fourier transformation (Discrete Fourier Transformation, DFT)), for example, 15 kHz numerology: 2k DFT, 7.5 kHz numerology: 4k DFT, and 1.25 kHz numerology: 24k DFT.

That is, if a terminal supports a maximum of 5 DL CCs with a 15 kHz subcarrier spacing in downlink, when the terminal receives a 7.5 kHz or 1.25 kHz subcarrier spacing of a multicast service, it is equivalent to that the terminal cannot support the other 4 DL CCs anymore, namely, a capability of the terminal is limited. As a result, not only reporting of a carrier is required but also reporting of special numerology needs to be added, to notify a unicast serving base station about one DL CC and consumption and occupation of a high processing capability corresponding to the numerology. In particular, when the numerology of multicast reception is defaulted, it may be considered that this case corresponds to a default parameter, such as a 15 kHz subcarrier spacing.

Further, the capability information may be information about a capability occupied by a carrier of the multicast service. That is, the terminal can directly report reduced capability information because the terminal has already received the multicast service on a specific frequency and bandwidth. Therefore, in this case, the terminal may consider that the CA band combination has changed, namely, the terminal no longer supports the original CA band combination in not including a frequency/bandwidth combination of the multicast carrier, but can only support other combinations. Therefore, the CA band combination needs to be updated. Accordingly, the terminal needs to report an updated CA band combination to the network side device. For this reporting manner, it may be understood that the terminal reports the part occupied by the carrier of the multicast service on the basis of keeping the basic capability information unchanged, so that the network side device has more control margins.

Alternatively, the capability information may also include information about a remaining capability other than the capability of the terminal that is occupied by the carrier of the multicast service. That is, the terminal calculates and excludes remaining capability information other than the multicast service by itself, reports an updated capability to the network side device again, so that the terminal can perform capability allocation by itself, thereby making the terminal compatible with more other situations, such as a capability dynamic allocation problem of a multi-card terminal in different operator networks. For example, in terms of numerology, since a subcarrier spacing of the carrier of the multicast service may be usual 15 kHz or another unusual spacing, the terminal calculates a remaining processing capability based on a processing capability that has been already occupied and reports the remaining processing capability to the network side device as capability information.

It should be noted that once the terminal reports the carrier feature information or the capability information, it means that the unicast serving base station needs to always use reduced or changed capability information to limit unicast service scheduling. However, considering that in actual multicast service transmission, most multicast services have a specific periodicity feature, that is, the multicast service is transmitted only at a specific time domain periodicity position, and multicast reception is not performed at other positions. In this regard, in this application, it is considered to also report the time domain periodicity information to the unicast serving base station simultaneously, so that a capability or unicast scheduling limitation operation can be only performed in a periodicity (or an active time) of multicast service transmission, and the capability or unicast scheduling limitation operation does not need to be performed in an inactive time (inactive time) of multicast service reception, so that a full capability can be used for unicast service scheduling, thereby maximizing the use of the capability of the terminal, providing a better reception effect for the multicast service and the unicast service of the terminal, and ensuring the system resource efficiency.

Based on this, in an implementation, the time domain periodicity information reported by the terminal to the unicast serving base station at least may include at least one of the following (21) to (26).

(21) A discontinuous reception (Discontinuous Reception, DRX) configuration of the multicast service.

(22) A periodicity length of the multicast service.

(23) A starting position of a periodicity of the multicast service.

The starting position may be an absolute position or a relative position, which is not limited herein.

(24) A length of onDuration (onDuration, or referred to as an onDuration timer) of the multicast service.

In this embodiment, if the foregoing (21) to (24) are combined and the multicast service may be in a periodicity of 40 ms (that is, a periodicity length), multicast service reception may be repeated in periods from 0 ms to 40 ms, from 40 ms to 80 ms, and the like. A length of the on Duration timer is 5 ms, that is, the terminal needs to perform multicast service reception in the first 5 ms of each periodicity and does not need to perform multicast service reception in the last 35 ms.

(25) Period information of an active time (active time) of the multicast service.

(26) Pattern (pattern) information of the active time of the multicast service (that is, an active time pattern) in each period.

In this embodiment, if the foregoing (25) and (26) are combined, the unicast serving base station may adopt a more flexible active time pattern configuration. For example, the multicast service is based on a periodicity of 10 ms, multicast service reception is repeated in periods from 5 ms to 15 ms, from 15 ms to 25 ms, and the like, and the active time in each periodicity may be configured or indicated through a bitmap (bitmap) or another manner. For example, "0011100110" specifies a specific active/inactive pattern in a period, where "1" represents that multicast service reception is active/on at the time domain position (that is, receiving a multicast service), "0" represents that multicast service reception is inactive/off at the time domain position (that is, not receiving a multicast service), and each bit (bit) represents 1 ms.

In this regard, if the terminal is receiving more than one multicast service, or the terminal is interested in more than one multicast service, there may be a correspondence (or a mapping relationship) between the carrier feature information/capability changing information and the time domain periodicity information of the multicast service that are reported by the terminal, to implement flexible information reporting.

For example, in an implementation, in a case that the related information of the multicast service includes a plurality of pieces of carrier feature information of the multicast service, the carrier feature information and the time domain periodicity information of the multicast service may meet a first mapping relationship. The first mapping relationship includes any one of the following (31) to (33).

(31) The carrier feature information is in a one-to-one correspondence with the time domain periodicity information.

For example, assuming that the time domain periodicity information is an active time configuration (active time configuration), carrier feature information 1 corresponds to an active time configuration 1, carrier feature information 2 corresponds to an active time configuration 2, ..., and so on. The terminal receives one or more multicast services on each carrier.

(32) The plurality of pieces of carrier feature information correspond to the same piece of time domain periodicity information.

For example, assuming that the time domain periodicity information is an active time configuration, carrier feature information 1, carrier feature information 2, and the like all correspond to an active time configuration 1. For example, the carrier feature information is in an all-to-1 correspondence with the time domain periodicity information. One or more multicast services are received on each carrier.

(33) In a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

For example, assuming that the time domain periodicity information is an active time configuration and the plurality of pieces of carrier feature information are from a carrier feature information group 1 and a carrier feature information group 2, one or more pieces of different carrier feature information belonging to the same carrier feature information group correspond to the same piece of time domain periodicity information, such as an active time configuration 1; or carrier feature information in a carrier feature information group 1, a carrier feature information group 2, ..., and the like all corresponds to the same piece of time domain periodicity information, such as an active time configuration 1; or carrier feature information in a carrier feature information group 1 corresponds to an active time configuration 1, carrier feature information in a carrier feature information group 2 corresponds to an active time configuration 2, ..., and so on. Each carrier feature information group includes one or more pieces of carrier feature information, and one or more multicast services are received on each carrier.

Similarly, in another implementation, in a case that the related information of the multicast service includes a plurality of pieces of capability information, the capability information and the time domain periodicity information meet a second mapping relationship. The second mapping relationship includes any one of the following (41) to (43).

(41) The capability information is in a one-to-one correspondence with the time domain periodicity information.

For example, assuming that the time domain periodicity information is an active time configuration, capability information 1 corresponds to an active time configuration 1, capability information 2 corresponds to an active time configuration 2, ..., and so on. The capability information may be in a one-to-one correspondence with the time domain periodicity information. Each piece of capability information is caused by reception of one or more multicast services, and the multicast services may be located on the same carrier or may be located on different carriers.

(42) The plurality of pieces of capability information correspond to the same piece of time domain periodicity information.

For example, assuming that the time domain periodicity information is an active time configuration, capability information 1, capability information 2, and the like all correspond to an active time configuration 1. For example, the capability information is in an all-to-1 correspondence with the time domain periodicity information. The capability information is caused by reception of all multicast services.

(43) In a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

For example, assuming that the time domain periodicity information is an active time configuration and the plurality of pieces of capability information are from a capability information group 1 and a capability information group 2, one or more pieces of different capability information belonging to the same capability information group correspond to the same piece of time domain periodicity information, such as an active time configuration 1; or capability information in a capability information group 1, a capability information group 2, ..., and the like all corresponds to the same piece of time domain periodicity information, such as an active time configuration 1; or capability information in a capability information group 1 corresponds to an active time configuration 1, capability information in a capability information group 2 corresponds to an active time configuration 2, ..., and so on. Each capability information group includes one or more pieces of capability information.

Certainly, after the network side device receives the carrier feature information or the capability information from the terminal and the corresponding time domain periodicity information is reported, unicast service scheduling may be performed by taking the remaining capability of the terminal into account within a corresponding effective time domain range to avoid influence on multicast service reception. In addition, it is ensured to the greatest extent that the unicast service and the multicast service are normally received together.

Further, considering that the time domain periodicity information is reported through uplink (Uplink, UL) radio resource control (Radio Resource Control, RRC) signaling, only relatively semi-static time domain information can be reported, for example, DRX onDuration or a semi-static periodicity pattern. However, in general, in addition to periodic services, the multicast service may further include some non-periodic services, or the periodic services also include some extra information or a service amount of each periodic service has a specific fluctuation. As a result, transmission of the multicast service may not be completely limited to a specific static time. For example, there may be an extended active time.

For example, in addition to the configuration of DRX onDuration, a configuration of an inactivity timer (inactivity timer) is still required, when the network side device configures the inactivity timer to a non-zero value, it means that the terminal may start or restart the inactivity timer upon receiving new scheduled signaling for the multicast service that is sent by the network side device. During operation of the inactivity timer, multicast service reception of the terminal is still within an active time range, that is, the terminal still needs to prepare for multicast service reception. That is, a reception time range of the terminal on a multicast carrier will be dynamically adjusted and no longer meet the time domain periodicity information notified through static signaling.

For this case, in an implementation, the terminal may send first indication information to the network side device for indicating extended information of the active time, namely, dynamic time domain information, to the network side device, so that the network side device schedules the unicast service better. Optionally, the extended information at least may include at least one of a relative time, an absolute time, an end time, and a start time.

The absolute time refers to that the terminal dynamically reports a moment, a system frame number (System frame number, SFN), or a slot (slot) to which the active time is extended currently.

The relative time refers to that the active time is extended by several milliseconds or slots by using a current reporting time point as a reporting time reference point. It may be understood that, compared to the absolute time, reporting of the relative time has fewer overheads, but requires that understanding of the terminal and the network side device on the reporting time reference point is consistent and completely synchronized.

The start time of the active time: Since the start time of the active time is generally clear, which starts from a starting position of the onDuration or starts from a position statically indicating "on" in a pattern, indication of the start time is not necessary, or indication of the start time may be used in some cases. For example, when the unicast serving base station is not clear about a re-(again)start time of the active time, the indication of the start time of the active time may be performed.

The end time of the active time: Since the active time may be dynamically extended, an end position of the active time in each periodicity is not fixed. For example, due to influence of the randomness of arrival of the multicast service, the terminal may send one piece of active time off indication to the unicast serving base station at an end position of the active time at which the multicast service is received each time according to an actual arrival situation of the multicast service. Accordingly, after the unicast serving base station receives the active time off, the unicast serving base station knows that multicast service reception in this periodicity is ended, and subsequent unicast scheduling may not consider a capability reduction problem caused by multicast service reception.

It should be understood that the extended information of the active time corresponds to at least one multicast service. Alternatively, when the terminal receives the multicast service on a plurality of carriers, the terminal may report a plurality of pieces of carrier feature information or capability information, and a change indication or an end indication (that is, the first indication information) of the dynamic active time may also be indicated, for example, indicated for a plurality of times, according to reporting requirements of the multicast service, the carrier feature information, and the capability information. Further, when the first indication information indicates the end time of the active time, the first indication information may configure different resources for each different carrier feature information, so that the terminal may indicate on the different resources an active time end position of a corresponding carrier or a shared resource, but the terminal needs to distinguish the carrier feature information in the first indication information.

In addition, since the terminal implements dynamic indication by using the first indication information, in this application, the first indication information may adopt a transmission manner with lower latency. For example, the first indication information may be L1 signaling (signaling), media access control (Media access Control, MAC) signaling, and the like. Taking the L1 signaling as an example, the network side device may configure some periodic uplink L1 signaling resources for the terminal, to transmit uplink active time extended information indication, namely, the first indication information quickly.

It may be understood that, when the network side device receives the carrier feature information/capability changing information, the time domain periodicity information, and the dynamic time domain indication information that are reported by the terminal, the network side device may dynamically evaluate the remaining capability of the terminal within a corresponding time domain range to perform unicast service scheduling, thereby avoiding influence on multicast service reception and also ensuring to the greatest extent that unicast and multicast reception can be normally received together.

Further, for the foregoing capability change of the terminal, since the terminal also requires a specific time to perform capability adjustment. For example, if the terminal needs to start MBS service reception at a moment T1, the terminal may need to start adjusting its own receiver and/or processor allocation at a moment T1-t1. For another example, if the terminal finishes multicast service reception at a moment T2, the terminal may complete all receiver adjustment and/or processor adjustment at a moment T2 + tl, to be in a state of processing unicast service reception with a full capability. That is, a change in the capability splitting of the terminal may require specific adjustment duration. The adjustment duration is limited by a specific capability (for example, a hardware capability) of the terminal. That is, the adjustment duration of each terminal may be different. For example, some terminals may complete capability adjustment at a microsecond level, while some terminal may complete capability adjustment at a millisecond level. Therefore, for terminals having different adjustment capabilities, buffering or validation duration required by the network side device in scheduling may be different. Therefore, the network side device needs to know a magnitude of the adjustment capability of each terminal. In this regard, this application provides the following two manners for the network side device to know the adjustment capability (that is, adjustment capability information) of each terminal, and the details are as follows.

Manner 1: The terminal may report the magnitude of the adjustment capability (adjustment capability information) of the terminal to the network side device through the related information of the multicast service. That is, the related information of the multicast service may further include service adjustment capability information of the terminal in addition to the capability information, the carrier feature information of the multicast service, and the time domain periodicity information of the multicast service. The service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

For example, the terminal may simultaneously report its own adjustment capability information when reporting the capability information, the carrier feature information of the multicast service, and the time domain periodicity information of the multicast service. For example, a terminal 1 reports that the terminal completes fast adjustment from the first mode supporting both multicast service reception and unicast service reception to the second mode supporting only unicast service reception within xl ms, and/or that the terminal completes adjustment from the second mode supporting only unicast service reception to the first mode supporting both multicast service reception and unicast service reception within yl ms. x1 and y1 may be the same or different. A terminal 2 may also report its own adjustment capability information. Therefore, the network side device can schedule each terminal accordingly according to capabilities of different terminals.

Manner 2: A minimum capability requirement is agreed on or preconfigured in a protocol. For example, it is agreed on in the protocol that all terminals complete fast adjustment from the first mode supporting both multicast service reception and unicast service reception to the second mode supporting only unicast service reception within x ms, and/or it is agreed on in the protocol that all the terminals complete adjustment from the second mode supporting only unicast service reception to the first mode supporting both multicast service reception and unicast service reception within y ms. x and y may be the same or different. Therefore, the network side device can perform corresponding scheduling according to the minimum capability requirement. The terminal is only required to meet the minimum capability requirement, and is also allowed to have a faster adjustment capability.

Based on the foregoing description of each information, considering that in a communication network, the network side device is generally responsible for controlling all functions, the network side device may configure a reporting state or reporting information of the terminal according to its own algorithm and requirement, for example, whether the network side device supports carrier feature information reporting, capability changing information reporting, time domain periodicity information reporting (including static indication or dynamic indication information), resource configuration of dynamic indication used for time domain periodicity information, and the like. Correspondingly, the terminal needs to report corresponding information under the configuration and permission of the network side device.

In this regard, in an implementation, the network side device may send, according to its own algorithm and requirement, target configuration information to the terminal, where the target configuration information is used for indicating, to the terminal, whether the network side device supports the terminal in reporting the related information of the multicast service and/or whether the network side device supports the terminal in reporting the first indication information. Then, the terminal may perform a corresponding report operation according to the target configuration information after receiving the target configuration information sent by the network side device.

That is, the terminal reports the related information of the multicast service and the first indication information based on a "function switch" of the network side device, and an on/off state of the "function switch" may be notified to the terminal through the target configuration information, ensuring that understanding of the terminal and the network side device on the on/off state of the "function switch" is consistent, and further causing the terminal to perform reporting as required. For example, when the on/off state of the "function switch" is off, the terminal does not perform reporting.

For example, in a case that the target configuration information is used for indicating, to the terminal, whether the network side device supports the terminal in reporting the related information of the multicast service, the target configuration information may include any one of (51) and (52).

(51) The network side device does not support reporting of the carrier feature information of the multicast service, the capability changing information, the time domain periodicity information, or the service adjustment capability information. Accordingly, the terminal may skip a step of sending the related information of the multicast service to the network side device, and determine to receive the unicast service or the multicast service according to priority information of the unicast service and the multicast service.

For example, if a priority of the multicast service is higher than that of the unicast service, the terminal receives the multicast service, and vice versa.

(52) The network side device supports reporting of at least one of the carrier feature information of the multicast service, the capability changing information, the time domain periodicity information, or the service adjustment capability information. Accordingly, the terminal may perform a step of sending the related information of the multicast service to the network side device, where the related information of the multicast service is determined by at least one of the carrier feature information of the multicast service, the capability changing information, the time domain periodicity information, and the service adjustment capability information that is supported by the network side device.

For example, if the network side device supports the carrier feature information of the multicast service and the capability information, but does not support reporting of the time domain periodicity information (equivalent to static time domain information), when the terminal needs to receive or is interested in receiving the multicast service, the terminal reports the carrier feature information of the multicast service or the capability information that is supported by the network side device but does not carry any time domain information (that is, the time domain periodicity information). In this case, scheduling behavior of the network side device may consider capability reduction caused by multicast service reception in all time domain ranges, as a result, unicast service scheduling is performed by using a reduced capability.

For another example, if the network side device supports the carrier feature information of the multicast service and the capability information and supports reporting of the time domain periodicity information (equivalent to static time domain information), the terminal may report, when the terminal needs to receive or is interested in receiving the multicast service, the carrier feature information of the multicast service or the capability information that is supported by the network side device and carries the corresponding static time domain information (that is, the time domain periodicity information). In this case, scheduling behavior of the network side device may consider capability reduction caused by multicast service reception in a time domain range corresponding to the static time domain information, so that a time range of performing unicast scheduling by using a reduced capability is reduced, and a unicast scheduling capability is enlarged.

It should be noted that, in a case that the network side device supports time domain periodicity information static indication, the terminal side may not obtain DRX information of the multicast service, that is, the multicast service is not configured with DRX. In this way, a serving base station corresponding to the multicast service may schedule the multicast service in all time domain ranges by default. In this case, the terminal cannot report corresponding static time domain information, and influence on unicast scheduling is the same as a case that the network side device does not support the time domain information static indication.

For another example, if the network side device supports the carrier feature information of the multicast service and the capability information and supports reporting of the time domain periodicity information (equivalent to static time domain information) and the first indication information (equivalent to dynamic time domain information), the terminal may report, when the terminal needs to receive or is interested in receiving the multicast service, the carrier feature information of the multicast service or the capability information that is supported by the network side device and carries the corresponding static time domain information (that is, the first indication information), and may further dynamically indicate the extended information of the active time to the network side device according to a dynamic scheduling situation of the multicast service.

In this case, scheduling behavior of the network side device may consider capability reduction caused by multicast service reception in a time domain range indicated by the first indication information from the terminal, so that a time range of performing unicast scheduling by using a reduced capability is reduced, and a unicast scheduling capability is enlarged.

In particular, although the network side device supports the dynamic time domain information and the static time domain information simultaneously, since the multicast service does not have a requirement for dynamically expanding the active time or some policies on the terminal side (for example, unicast first), the terminal may also choose to report only the static time domain information. Therefore, the network side device only needs to consider a static time domain pattern during unicast service scheduling, and the terminal may also preferentially process unicast scheduling data of the network side device even if active time expansion occurs.

Further, similar to the related information of the multicast service, for the first indication information, if the target configuration information indicates that the network side device supports or does not support the terminal in reporting the first indication information, the terminal may perform reporting of the first indication information according to the target configuration information. For example, if the network side device does not support the terminal in reporting the first indication information, the terminal does not report the first indication information. For another example, if the network side device supports the terminal in reporting the first indication information, the terminal may report the first indication information to the network side device according to a requirement of the terminal itself.

In this embodiment, the terminal reports the related information of the multicast service, so that the network side device may flexibly adjust scheduling and transmission of the unicast service according to a reception status of the multicast service, to ensure collaboration of the two types of services. Therefore, reception performance of the UE is improved while ensuring the resource efficiency, thereby avoiding a decrease in reception experience caused by mutual influence between reception of the two types of services.

FIG. 4 is a schematic flowchart of a multicast service transmission method 400 according to an exemplary embodiment of this application. The method may be, but not limited to, performed by a network side device, and specifically, may be performed by hardware and/or software installed in the network side device. In this embodiment, the method 400 at least may include the following step.

S410. The network side device receives related information of a multicast service that is sent by a terminal

The network side device is a network side device that provides a unicast service to the terminal, the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

S420. The network side device schedules the unicast service according to at least one of the capability information, the carrier feature information of the multicast service, and the time domain periodicity information of the multicast service.

Optionally, the capability information includes information about a capability of the terminal that is occupied by a carrier of the multicast service, or the capability information includes information about a remaining capability other than the capability of the terminal that is occupied by the carrier of the multicast service.

Optionally, the time domain periodicity information includes at least one of the following: a discontinuous reception DRX configuration of the multicast service; a periodicity length of the multicast service; a starting position of a periodicity of the multicast service; a length of onDuration of the multicast service; periodicity information of an active time active time of the multicast service; or pattern information of the active time of the multicast service in each period.

Optionally, in a case that the related information of the multicast service includes a plurality of pieces of carrier feature information, the carrier feature information and the time domain periodicity information meet a first mapping relationship, where the first mapping relationship includes any one of the following: the carrier feature information is in a one-to-one correspondence with the time domain periodicity information; the plurality of pieces of carrier feature information correspond to the same piece of time domain periodicity information; or in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

Optionally, in a case that the related information of the multicast service includes a plurality of pieces of capability information, the capability information and the time domain periodicity information meet a second mapping relationship, where the second mapping relationship includes any one of the following: the capability information is in a one-to-one correspondence with the time domain periodicity information; the plurality of pieces of capability information correspond to the same piece of time domain periodicity information; or in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

Optionally, the related information of the multicast service further includes service adjustment capability information of the terminal, where the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

Optionally, the related information of the multicast service is transmitted through any one of the following: a multicast service interest indication MBS Interest Indication; terminal assistance information UE assistance information; or first signaling, where the first signaling is agreed on in a protocol and dedicated to reporting the related information of the multicast service.

Optionally, the method further includes: receiving, by the network side device, first indication information sent by the terminal, where the first indication information is used for indicating extended information of the active time of the multicast service to the network side device, and the extended information includes at least one of a relative time, an absolute time, an end time, and a start time.

Optionally, the first indication information is transmitted through L1 signaling or MAC signaling.

Optionally, the extended information of the active time corresponds to at least one multicast service.

Optionally, the method further includes: sending, by the network side device, target configuration information to the terminal, where the target configuration information is used for indicating, to the terminal, whether the network side device supports the terminal in reporting the related information of the multicast service and/or whether the network side device supports the terminal in reporting the first indication information.

Optionally, in a case that the target configuration information is used for indicating, to the terminal, whether the network side device supports the terminal in reporting the related information of the multicast service, the target configuration information includes any one of the following: the network side device does not support reporting of the carrier feature information of the multicast service, capability changing information, the time domain periodicity information, or the service adjustment capability information; or the network side device supports reporting of at least one of the carrier feature information, the capability changing information, the time domain periodicity information, or the service adjustment capability information of the multicast service.

It may be understood that, for implementation processes of the implementations in this method embodiment, reference may be made to the related description in the method embodiments 200 and/or 300, and the same or corresponding technical effect can be achieved. To avoid repetition, details are not described herein again.

The multicast service transmission method provided in the embodiments of this application may be executed by a multicast service transmission apparatus. The multicast service transmission apparatus provided in the embodiments of this application is described by using an example in which the multicast service transmission method is executed by a multicast service transmission apparatus in the embodiments of this application.

FIG. 5 shows a schematic structural diagram of a multicast service transmission apparatus 500 according to an exemplary embodiment of this application. The apparatus 500 includes: a first transmission module 510, configured to send, in a case of being interested in or receiving a multicast service, related information of the multicast service to a network side device corresponding to a unicast service, where the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

Optionally, the capability information includes information about a capability of the terminal that is occupied by a carrier of the multicast service, or the capability information includes information about a remaining capability other than the capability of the terminal that is occupied by the carrier of the multicast service.

Optionally, the time domain periodicity information includes at least one of the following: a discontinuous reception DRX configuration of the multicast service; a periodicity length of the multicast service; a starting position of a periodicity of the multicast service; a length of onDuration of the multicast service; periodicity information of an active time active time of the multicast service; or pattern information of the active time of the multicast service in each period.

Optionally, in a case that the related information of the multicast service includes a plurality of pieces of carrier feature information of the multicast service, the carrier feature information and the time domain periodicity information of the multicast service meet a first mapping relationship, where the first mapping relationship includes any one of the following: the carrier feature information is in a one-to-one correspondence with the time domain periodicity information; the plurality of pieces of carrier feature information correspond to the same piece of time domain periodicity information; or in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

Optionally, in a case that the related information of the multicast service includes a plurality of pieces of capability information, the capability information and the time domain periodicity information meet a second mapping relationship, where the second mapping relationship includes any one of the following: the capability information is in a one-to-one correspondence with the time domain periodicity information; the plurality of pieces of capability information correspond to the same piece of time domain periodicity information; or in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

Optionally, the related information of the multicast service further includes service adjustment capability information of the terminal, where the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

Optionally, the related information of the multicast service is transmitted through any one of the following: a multicast service interest indication MBS Interest Indication; terminal assistance information UE assistance information; or first signaling, where the first signaling is agreed on in a protocol and dedicated to reporting the related information of the multicast service.

Optionally, an occasion for triggering sending of the related information of the multicast service includes any one of the following: the terminal starts the multicast service; the terminal ends the multicast service; the terminal receives that a carrier feature of the multicast service changes; or the terminal receives that capability information of the multicast service changes.

Optionally, the first transmission module 510 is further configured to send first indication information to the network side device, where the first indication information is used for indicating extended information of the active time of the multicast service to the network side device, and the extended information includes at least one of a relative time, an absolute time, an end time, and a start time.

Optionally, the first indication information is transmitted through L1 signaling or MAC signaling.

Optionally, the extended information of the active time corresponds to at least one multicast service.

Optionally, the first transmission module 510 is further configured to receive target configuration information sent by the network side device, where the target configuration information is used for indicating, to the terminal, whether the network side device supports the terminal in reporting the related information of the multicast service and/or whether the network side device supports the terminal in reporting the first indication information.

Optionally, in a case that the target configuration information is used for indicating, to the terminal, whether the network side device supports the terminal in reporting the related information of the multicast service, the target configuration information includes any one of the following: the network side device does not support reporting of the carrier feature information of the multicast service, capability changing information, the time domain periodicity information, or the service adjustment capability information; or the network side device supports reporting of at least one of the carrier feature information, the capability changing information, the time domain periodicity information, or the service adjustment capability information of the multicast service.

Optionally, the first transmission module 510 is further configured to: in a case that the target configuration information includes that the network side device does not support reporting of the carrier feature information of the multicast service, the capability changing information, the time domain periodicity information, and the service adjustment capability information, skip a step of sending the related information of the multicast service to the network side device, and determine to receive the unicast service or the multicast service according to priority information of the unicast service and the multicast service; or in a case that the target configuration information includes that the network side device supports reporting of at least one of the carrier feature information of the multicast service, the capability changing information, the time domain periodicity information, and the service adjustment capability information, perform a step of sending the related information of the multicast service to the network side device, where the related information of the multicast service is determined by at least one of the carrier feature information of the multicast service, the capability changing information, the time domain periodicity information, and the service adjustment capability information that is supported by the network side device.

The multicast service transmission apparatus 500 in the embodiments of this application may be an electronic device, for example, an electronic device with an operating system, or a component in the electronic device, for example, an integrated circuit or a chip. The electronic device may be a terminal, or another device other than the terminal. For example, the terminal may include but is not limited to the types of terminal 11 listed above, and the another device may be a server, a network attached storage (Network Attached Storage, NAS), and the like, which is not specifically limited in the embodiments of this application.

The multicast service transmission apparatus 500 provided in this embodiment of this application can implement each process implemented in the method embodiments in FIG. 2 and FIG. 3, and achieve the same technical effect. To avoid repetition, details are not described herein again.

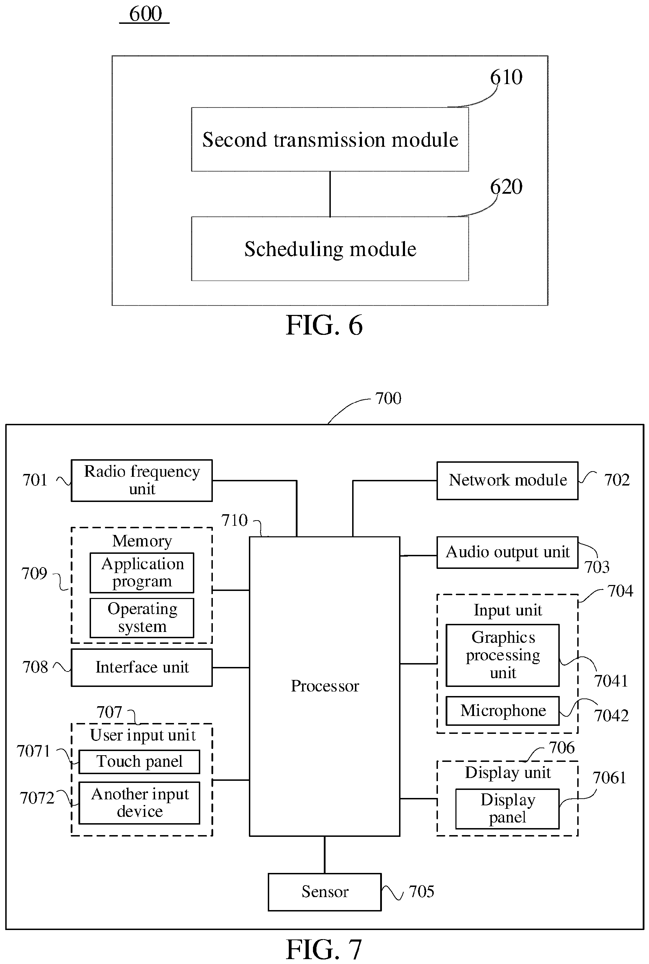

FIG. 6 shows a schematic structural diagram of a multicast service transmission apparatus 600 according to an exemplary embodiment of this application. The apparatus 600 includes: a second transmission module 610, configured to receive related information of a multicast service that is sent by a terminal, where the network side device is a network side device that provides a unicast service to the terminal, the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service; and a scheduling module 620, configured to schedule the unicast service according to at least one of the capability information, the carrier feature information of the multicast service, and the time domain periodicity information of the multicast service.

Optionally, the capability information includes information about a capability of the terminal that is occupied by a carrier of the multicast service, or the capability information includes information about a remaining capability other than the capability of the terminal that is occupied by the carrier of the multicast service.

Optionally, the time domain periodicity information includes at least one of the following: a discontinuous reception DRX configuration of the multicast service; a periodicity length of the multicast service; a starting position of a periodicity of the multicast service; a length of onDuration of the multicast service; periodicity information of an active time active time of the multicast service; or pattern information of the active time of the multicast service in each period.

Optionally, in a case that the related information of the multicast service includes a plurality of pieces of carrier feature information, the carrier feature information and the time domain periodicity information meet a first mapping relationship, where the first mapping relationship includes any one of the following: the carrier feature information is in a one-to-one correspondence with the time domain periodicity information; the plurality of pieces of carrier feature information correspond to the same piece of time domain periodicity information; or in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

Optionally, in a case that the related information of the multicast service includes a plurality of pieces of capability information, the capability information and the time domain periodicity information meet a second mapping relationship, where the second mapping relationship includes any one of the following: the capability information is in a one-to-one correspondence with the time domain periodicity information; the plurality of pieces of capability information correspond to the same piece of time domain periodicity information; or in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

Optionally, the related information of the multicast service further includes service adjustment capability information of the terminal, where the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

Optionally, the related information of the multicast service is transmitted through any one of the following: a multicast service interest indication MBS Interest Indication; terminal assistance information UE assistance information; or first signaling, where the first signaling is agreed on in a protocol and dedicated to reporting the related information of the multicast service.

Optionally, the second transmission module 610 is further configured to receive first indication information sent by the terminal, where the first indication information is used for indicating extended information of the active time of the multicast service to the network side device, and the extended information includes at least one of a relative time, an absolute time, an end time, and a start time.

Optionally, the first indication information is transmitted through L1 signaling or MAC signaling.

Optionally, the extended information of the active time corresponds to at least one multicast service.

Optionally, the second transmission module 610 is further configured to send target configuration information to the terminal, where the target configuration information is used for indicating, to the terminal, whether the network side device supports the terminal in reporting the related information of the multicast service and/or whether the network side device supports the terminal in reporting the first indication information.

Optionally, in a case that the target configuration information is used for indicating, to the terminal, whether the network side device supports the terminal in reporting the related information of the multicast service, the target configuration information includes any one of the following: the network side device does not support reporting of the carrier feature information of the multicast service, capability changing information, the time domain periodicity information, or the service adjustment capability information; or the network side device supports reporting of at least one of the carrier feature information, the capability changing information, the time domain periodicity information, or the service adjustment capability information of the multicast service.

The multicast service transmission apparatus in the embodiments of this application may be a network side device. The network side device may include but is not limited to the types of network side device 12 listed above, and the another device may be a server, a network attached storage (Network Attached Storage, NAS), and the like, which is not specifically limited in the embodiments of this application.

The multicast service transmission apparatus provided in this embodiment of this application can implement each process implemented in the method embodiment in FIG. 4, and achieve the same technical effect. To avoid repetition, details are not described herein again.

An embodiment of this application further provides a terminal, including a processor and a communication interface, where the communication interface is coupled to the processor, and the processor is configured to execute a program or instructions to implement the steps of the methods described in the method embodiments 200 and 300. This terminal embodiment corresponds to the method embodiment on the terminal side. The implementation processes and implementations of the foregoing method embodiment may be applied to this terminal embodiment, and the same technical effect can be achieved. Specifically, FIG. 7 is a schematic diagram of a hardware structure of a terminal implementing an embodiment of this application.

The terminal 700 includes, but is not limited to, at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (such as a battery) for supplying power to the components. The power supply may be logically connected to the processor 710 through a power management system, thereby implementing functions such as charging, discharging, and power consumption management through the power management system. The terminal structure shown in FIG. 7 does not constitute a limitation on the terminal, and the terminal may include more or fewer components than those shown in the figure, or combine some components, or use a different component deployment. Details are not described herein again.

It should be understood that, in the embodiments of this application, the input unit 704 may include a graphics processing unit (Graphics Processing Unit, GPU) 1041 and a microphone 7042. The graphics processing unit 7041 processes image data of a static picture or a video that is obtained by an image acquisition device (such as a camera) in a video acquisition mode or an image acquisition mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional key (such as a volume control key or a switch key), a track ball, a mouse, and a joystick. Details are not described herein again.

In the embodiments of this application, after receiving downlink data from a network side device, the radio frequency unit 701 may transmit the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area that stores a program or an instruction and a second storage area that stores data, where the first storage area may store an operating system, an application program or an instruction required for at least one function (for example, a sound playback function, an image display function, and the like), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these memories and any other memory of a suitable type.

The processor 710 may include one or more processing units. Optionally, the processor 710 integrates an application processor and a modem processor. The application processor mainly processes operations involving an operating system, a user interface, an application program, and the like. The modem processor mainly processes a wireless communication signal, for example, a baseband processor. It may be understood that, the modem processor may alternatively not be integrated in the processor 710.

The radio frequency unit 701 is configured to send, in a case of being interested in or receiving a multicast service, related information of the multicast service to a network side device corresponding to a unicast service, where the related information of the multicast service at least includes at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

Optionally, the capability information includes information about a capability of the terminal that is occupied by a carrier of the multicast service, or the capability information includes information about a remaining capability other than the capability of the terminal that is occupied by the carrier of the multicast service.

Optionally, the time domain periodicity information includes at least one of the following: a discontinuous reception DRX configuration of the multicast service; a periodicity length of the multicast service; a starting position of a periodicity of the multicast service; a length of onDuration of the multicast service; periodicity information of an active time active time of the multicast service; or pattern information of the active time of the multicast service in each period.

Optionally, in a case that the related information of the multicast service includes a plurality of pieces of carrier feature information of the multicast service, the carrier feature information and the time domain periodicity information of the multicast service meet a first mapping relationship, where the first mapping relationship includes any one of the following: the carrier feature information is in a one-to-one correspondence with the time domain periodicity information; the plurality of pieces of carrier feature information correspond to the same piece of time domain periodicity information; or in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

Optionally, in a case that the related information of the multicast service includes a plurality of pieces of capability information, the capability information and the time domain periodicity information meet a second mapping relationship, where the second mapping relationship includes any one of the following: the capability information is in a one-to-one correspondence with the time domain periodicity information; the plurality of pieces of capability information correspond to the same piece of time domain periodicity information; or in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

Optionally, the related information of the multicast service further includes service adjustment capability information of the terminal, where the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

Optionally, the related information of the multicast service is transmitted through any one of the following: a multicast service interest indication MBS Interest Indication; terminal assistance information UE assistance information; or first signaling, where the first signaling is agreed on in a protocol and dedicated to reporting the related information of the multicast service.

Optionally, an occasion for triggering sending of the related information of the multicast service includes any one of the following: the terminal starts the multicast service; the terminal ends the multicast service; the terminal receives that a carrier feature of the multicast service changes; or the terminal receives that capability information of the multicast service changes.

Optionally, the radio frequency unit 701 is further configured to send first indication information to the network side device, where the first indication information is used for indicating extended information of the active time of the multicast service to the network side device, and the extended information includes at least one of a relative time, an absolute time, an end time, and a start time.

Optionally, the first indication information is transmitted through L1 signaling or MAC signaling.

Optionally, the extended information of the active time corresponds to at least one multicast service.

Optionally, the radio frequency unit 701 is further configured to receive target configuration information sent by the network side device, where the target configuration information is used for indicating, to the terminal, whether the network side device supports the terminal in reporting the related information of the multicast service and/or whether the network side device supports the terminal in reporting the first indication information.

Optionally, in a case that the target configuration information is used for indicating, to the terminal, whether the network side device supports the terminal in reporting the related information of the multicast service, the target configuration information includes any one of the following: the network side device does not support reporting of the carrier feature information of the multicast service, capability changing information, the time domain periodicity information, or the service adjustment capability information; or the network side device supports reporting of at least one of the carrier feature information, the capability changing information, the time domain periodicity information, or the service adjustment capability information of the multicast service.

Optionally, the radio frequency unit 701 is further configured to: in a case that the target configuration information includes that the network side device does not support reporting of the carrier feature information of the multicast service, the capability changing information, the time domain periodicity information, and the service adjustment capability information, skip a step of sending the related information of the multicast service to the network side device, and determine to receive the unicast service or the multicast service according to priority information of the unicast service and the multicast service; or in a case that the target configuration information includes that the network side device supports reporting of at least one of the carrier feature information of the multicast service, the capability changing information, the time domain periodicity information, and the service adjustment capability information, perform a step of sending the related information of the multicast service to the network side device, where the related information of the multicast service is determined by at least one of the carrier feature information of the multicast service, the capability changing information, the time domain periodicity information, and the service adjustment capability information that is supported by the network side device.

In this embodiment, in a case that a terminal is interested in or receives a multicast service, the terminal sends related information of the multicast service to a network side device corresponding to a unicast service, where the related information is at least one of capability information, carrier feature information of the multicast service, and time domain periodicity information of the multicast service. In this way, the network side device may accurately evaluate a capability of the terminal according to at least one of the capability information, the carrier feature information of the multicast service, and the time domain periodicity information of the multicast service, and further accurately schedule the unicast service. In addition, a capability of the terminal in scheduling a unicast service in a gap that no multicast service is performed can also be improved greatly, thereby improving user experience and avoiding a waste of system resources.

An embodiment of this application further provides a network side device, including a processor and a communication interface, where the communication interface is coupled to the processor, and the processor is configured to execute a program or instructions to implement the steps of the method described in the method embodiment 400. The network side device embodiment corresponds to the method embodiment of the foregoing network side device. The implementation processes and implementations of the foregoing method embodiment may be applied to the network side device embodiment, and the same technical effect can be achieved.

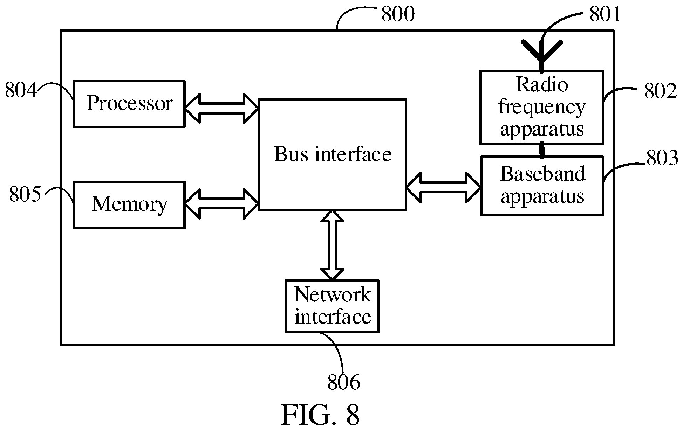

Specifically, an embodiment of this application further provides a network side device. As shown in FIG. 8, the network side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801 and sends the received information to the baseband apparatus 803 for processing. In a downlink direction, the baseband apparatus 803 processes to-be-sent information and sends the to-be-sent information to the radio frequency apparatus 802. The radio frequency apparatus 802 processes the received information and sends the information out through the antenna 801.

The method executed by the network side device in the foregoing embodiment may be implemented in the baseband apparatus 803, and the baseband apparatus 803 includes a baseband processor.

The baseband apparatus 803 may include, for example, at least one baseband board, and a plurality of chips are disposed on the baseband board. As shown in FIG. 8, one of the chips is, for example, the baseband processor, and is connected to the memory 805 through a bus interface to invoke a program in the memory 805, to perform operations of a network device shown in the foregoing method embodiment.

The network side device may further include a network interface 806, and for example, the interface is a common public radio interface (common public radio interface, CPRI).

Specifically, the network side device 800 in this embodiment of the present invention further includes an instruction or a program that is stored in the memory 805 and executable on the processor 804, and the processor 804 invokes the instruction or the program in the memory 805 to perform the method performed by the modules shown in FIG. 6, and achieves the same technical effect. To avoid repetition, details are not described herein again.

An embodiment of this application further provides a readable storage medium, having a program or an instruction stored therein. When the program or the instruction is executed by a processor, the processes in the foregoing multicast service transmission method embodiments are implemented, and the same technical effect can be achieved. To avoid repetition, details are not described herein again.

The processor is a processor in the terminal described in the foregoing embodiment. The readable storage medium includes a computer-readable storage medium, such as a computer read-only memory ROM, a random access memory RAM, a magnetic disk, an optical disc, or the like.

An embodiment of this application further provides a chip, including a processor and a communication interface, where the communication interface is coupled to the processor, and the processor is configured to execute a program or an instruction of a network side device to implement the processes in the multicast service transmission method embodiments, and achieve the same technical effect. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program product, including a processor, a memory, and a program or instructions stored in the memory and executable on the processor, where when the program or the instructions are executed by the processor, the processes of the foregoing multicast service transmission method embodiments are implemented, and the same technical effect can be achieved. To avoid repetition, details are not described herein again.

An embodiment of this application further provides a communication system, including a terminal and a network side device, where the terminal may be configured to perform the steps in the foregoing method embodiments 200/300, and the network side device may be configured to perform the steps in the foregoing method embodiment 400.

It should be noted that, the term "include", "comprise", or any other variant thereof in this specification is intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more limitations, an element defined by a sentence "including one......" does not exclude existence of other same elements in the process, the method, the object, or the apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the method according to the foregoing embodiments may be implemented by software and a necessary general hardware platform, and certainly, may alternatively be implemented by hardware, but in many cases, the former manner is a better implementation. Based on such an understanding, the technical solutions of this application essentially or the part contributing to the existing technology may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

## Claims

1. A multicast service transmission method, comprising:
sending, by a terminal in a case that the terminal is interested in or receives a multicast service, related information of the multicast service to a network side device corresponding to a unicast service, wherein
the related information of the multicast service at least comprises at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

2. The method according to claim 1, wherein the capability information comprises information about a capability of the terminal that is occupied by a carrier of the multicast service, or the capability information comprises information about a remaining capability other than the capability of the terminal that is occupied by the carrier of the multicast service.

3. The method according to claim 1, wherein the time domain periodicity information comprises at least one of the following:
a discontinuous reception DRX configuration of the multicast service;
a periodicity length of the multicast service;
a starting position of a periodicity of the multicast service;
a length of onDuration of the multicast service;
periodicity information of an active time active time of the multicast service; or
pattern information of the active time of the multicast service in each period.

4. The method according to any one of claims 1 to 3, wherein in a case that the related information of the multicast service comprises a plurality of pieces of carrier feature information of the multicast service, the carrier feature information and the time domain periodicity information of the multicast service meet a first mapping relationship, wherein
the first mapping relationship comprises any one of the following:
the carrier feature information is in a one-to-one correspondence with the time domain periodicity information;
the plurality of pieces of carrier feature information correspond to the same piece of time domain periodicity information; or
in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

5. The method according to any one of claims 1 to 3, wherein in a case that the related information of the multicast service comprises a plurality of pieces of capability information, the capability information and the time domain periodicity information meet a second mapping relationship, wherein
the second mapping relationship comprises any one of the following:
the capability information is in a one-to-one correspondence with the time domain periodicity information;
the plurality of pieces of capability information correspond to the same piece of time domain periodicity information; or
in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

6. The method according to any one of claims 1 to 4, wherein the related information of the multicast service further comprises service adjustment capability information of the terminal, wherein
the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

7. The method according to any one of claims 1 to 6, wherein the related information of the multicast service is transmitted through any one of the following:
a multicast service interest indication MBS Interest Indication;
terminal assistance information UE assistance information; or
first signaling, wherein the first signaling is agreed on in a protocol and dedicated to reporting the related information of the multicast service.

8. The method according to any one of claims 1 to 6, wherein an occasion for triggering sending of the related information of the multicast service comprises any one of the following:
the terminal starts the multicast service;
the terminal ends the multicast service;
the terminal receives that a carrier feature of the multicast service changes; or
the terminal receives that capability information of the multicast service changes.

9. The method according to any one of claims 1 to 8, wherein the method further comprises:
sending, by the terminal, first indication information to the network side device, wherein
the first indication information is used for indicating extended information of the active time of the multicast service to the network side device, and the extended information comprises at least one of a relative time, an absolute time, an end time, and a start time.

10. The method according to claim 9, wherein the first indication information is transmitted through L1 signaling or media access control MAC signaling.

11. The method according to claim 9, wherein the extended information of the active time corresponds to at least one multicast service.

12. The method according to any one of claims 1 to 11, wherein the method further comprises:
receiving, by the terminal, target configuration information sent by the network side device, wherein the target configuration information is used for indicating, to the terminal, whether the network side device supports the terminal in reporting the related information of the multicast service and/or whether the network side device supports the terminal in reporting the first indication information.

13. The method according to claim 12, wherein in a case that the target configuration information is used for indicating, to the terminal, whether the network side device supports the terminal in reporting the related information of the multicast service, the target configuration information comprises any one of the following:
the network side device does not support reporting of the carrier feature information of the multicast service, capability changing information, the time domain periodicity information, or the service adjustment capability information; or
the network side device supports reporting of at least one of the carrier feature information, the capability changing information, the time domain periodicity information, or the service adjustment capability information of the multicast service.

14. The method according to claim 13, wherein the method further comprises any one of the following:
in a case that the target configuration information comprises that the network side device does not support reporting of the carrier feature information of the multicast service, the capability changing information, the time domain periodicity information, and the service adjustment capability information, skipping, by the terminal, a step of sending the related information of the multicast service to the network side device, and determining to receive the unicast service or the multicast service according to priority information of the unicast service and the multicast service; or
in a case that the target configuration information comprises that the network side device supports reporting of at least one of the carrier feature information of the multicast service, the capability changing information, the time domain periodicity information, and the service adjustment capability information, performing, by the terminal, a step of sending the related information of the multicast service to the network side device, wherein the related information of the multicast service is determined by at least one of the carrier feature information of the multicast service, the capability changing information, the time domain periodicity information, and the service adjustment capability information that is supported by the network side device.

15. A multicast service transmission method, comprising:
receiving, by a network side device, related information of a multicast service that is sent by a terminal, wherein the network side device is a network side device that provides a unicast service to the terminal, the related information of the multicast service at least comprises at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service; and
scheduling, by the network side device, the unicast service according to at least one of the capability information, the carrier feature information of the multicast service, and the time domain periodicity information of the multicast service.

16. The method according to claim 15, wherein the capability information comprises information about a capability of the terminal that is occupied by a carrier of the multicast service, or the capability information comprises information about a remaining capability other than the capability of the terminal that is occupied by the carrier of the multicast service.

17. The method according to claim 15, wherein the time domain periodicity information comprises at least one of the following:
a discontinuous reception DRX configuration of the multicast service;
a periodicity length of the multicast service;
a starting position of a periodicity of the multicast service;
a length of onDuration of the multicast service;
periodicity information of an active time active time of the multicast service; or
pattern information of the active time of the multicast service in each period.

18. The method according to any one of claims 15 to 17, wherein in a case that the related information of the multicast service comprises a plurality of pieces of carrier feature information, the carrier feature information and the time domain periodicity information meet a first mapping relationship, wherein
the first mapping relationship comprises any one of the following:
the carrier feature information is in a one-to-one correspondence with the time domain periodicity information;
the plurality of pieces of carrier feature information correspond to the same piece of time domain periodicity information; or
in a case that the plurality of pieces of carrier feature information are divided into a plurality of groups, carrier feature information belonging to the same group corresponds to the same time domain periodicity information, or carrier feature information belonging to different groups corresponds to the same time domain periodicity information, or carrier feature information belonging to different groups corresponds to different time domain periodicity information.

19. The method according to any one of claims 15 to 17, wherein in a case that the related information of the multicast service comprises a plurality of pieces of capability information, the capability information and the time domain periodicity information meet a second mapping relationship, wherein
the second mapping relationship comprises any one of the following:
the capability information is in a one-to-one correspondence with the time domain periodicity information;
the plurality of pieces of capability information correspond to the same piece of time domain periodicity information; or
in a case that the plurality of pieces of capability information are divided into a plurality of groups, capability information belonging to the same group corresponds to the same time domain periodicity information, or capability information belonging to different groups corresponds to the same time domain periodicity information, or capability information belonging to different groups corresponds to different time domain periodicity information.

20. The method according to any one of claims 15 to 17, wherein the related information of the multicast service further comprises service adjustment capability information of the terminal, wherein
the service adjustment capability information is used for indicating a time required for the terminal to adjust from a first mode to a second mode and/or a time required for the terminal to adjust from the second mode to the first mode, the first mode is that the terminal performs multicast service reception and unicast service reception simultaneously, and the second mode is that the terminal performs unicast service reception and does not perform multicast service reception.

21. The method according to any one of claims 15 to 20, wherein the related information of the multicast service is transmitted through any one of the following:
a multicast service interest indication MBS Interest Indication;
terminal assistance information UE assistance information; or
first signaling, wherein the first signaling is agreed on in a protocol and dedicated to reporting the related information of the multicast service.

22. The method according to any one of claims 15 to 20, wherein the method further comprises:
receiving, by the network side device, first indication information sent by the terminal, wherein
the first indication information is used for indicating extended information of the active time of the multicast service to the network side device, and the extended information comprises at least one of a relative time, an absolute time, an end time, and a start time.

23. The method according to claim 22, wherein the first indication information is transmitted through L1 signaling or media access control MAC signaling.

24. The method according to claim 22, wherein the extended information of the active time corresponds to at least one multicast service.

25. The method according to any one of claims 15 to 24, wherein the method further comprises:
sending, by the network side device, target configuration information to the terminal, wherein the target configuration information is used for indicating, to the terminal, whether the network side device supports the terminal in reporting the related information of the multicast service and/or whether the network side device supports the terminal in reporting the first indication information.

26. The method according to claim 25, wherein in a case that the target configuration information is used for indicating, to the terminal, whether the network side device supports the terminal in reporting the related information of the multicast service, the target configuration information comprises any one of the following:
the network side device does not support reporting of the carrier feature information of the multicast service, capability changing information, the time domain periodicity information, or the service adjustment capability information; or
the network side device supports reporting of at least one of the carrier feature information, the capability changing information, the time domain periodicity information, or the service adjustment capability information of the multicast service.

27. A multicast service transmission apparatus, comprising:
a first transmission module, configured to send, in a case of being interested in or receiving a multicast service, related information of the multicast service to a network side device corresponding to a unicast service, wherein
the related information of the multicast service at least comprises at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service.

28. A multicast service transmission apparatus, applied to a network side device, the apparatus comprising:
a second transmission module, configured to receive related information of a multicast service that is sent by a terminal, wherein the network side device is a network side device that provides a unicast service to the terminal, the related information of the multicast service at least comprises at least one of capability information of the terminal, carrier feature information of the multicast service, and time domain periodicity information of the multicast service, and the time domain periodicity information of the multicast service is used for indicating an effective time domain of the capability information and/or the carrier feature information of the multicast service; and
a scheduling module, configured to schedule the unicast service according to at least one of the capability information, the carrier feature information of the multicast service, and the time domain periodicity information of the multicast service.

29. A terminal, comprising a processor and a memory, wherein the memory stores a program or instructions executable on the processor, and when the program or the instructions are executed by the processor, the steps of the multicast service transmission method according to any one of claims 1 to 14 are implemented.

30. A network side device, comprising a processor and a memory, wherein the memory stores a program or instructions executable on the processor, and when the program or the instructions are executed by the processor, the steps of the multicast service transmission method according to any one of claims 15 to 26 are implemented.

31. A readable storage medium, having a program or instructions stored therein, wherein when the program or the instructions are executed by a processor, the steps of the multicast service transmission method according to any one of claims 1 to 14 are implemented, or the steps of the multicast service transmission method according to any one of claims 15 to 26 are implemented.
